# EUROPEAN PATENT APPLICATION

(11) **EP 4 647 461 A2**
(43) Date of publication of application: **12.11.2025**
(21) Application number: 25174383.7
(22) Date of filing: 06.05.2025
(51) Int. Cl.: C08J 9/30, C08J 9/00

(54) **SOLID FOAM STRUCTURE AND METHOD**

(30) Priority: 07.05.2024 FI 20245567
(71) Applicant: Circular Foams Oy, 00370 Helsinki (FI)
(72) Inventor: Alava, Mikko, 00076 Aalto (FI); Buchta, Michael, 00076 Aalto (FI); Kauhanen, Lassi, 00076 Aalto (FI); Lejon, Juha, 00076 Aalto (FI); Mäkinen, Tero, 00076 Aalto (FI); Miranda Valdez, Isaac, 00076 Aalto (FI); Ranta, Riia, 00076 Aalto (FI); Raukko, Annukka, 00076 Aalto (FI)
(74) Representative: Papula Oy

(57) **Abstract**

A solid foam structure (1) comprising at least one foam sheet (2), wherein the solid foam structure (1) is configured to be prepared by making one or more perforations (3) to the at least one foam sheet (2) to tune mechanical and acoustic properties of the solid foam structure (1). Alternatively, the solid foam structure (1) is configured to be prepared from a suspension comprising a binding agent (6), a foaming agent (7), fibers (5), and a solvent to tune mechanical, fire retardant, water resistance and acoustic properties of the solid foam structure (1). Also a solid foam product (8) and a method is disclosed.

## Description

### FIELD OF THE INVENTION

The present application relates generally to a solid foam structure. More specifically, the present application relates to the solid foam structure comprising mechanical, fire retardant, water resistance and acoustic properties.

### BACKGROUND OF THE INVENTION

Solid foams may be made by foaming a material, creating a network of gas-filled pores, and then solidifying the structure to a solid material. Material structure and porosity in the solid foams may enforce the mechanical properties, and airflow resistivity may enforce acoustic properties. Also, added compounds may enhance fire retardant and water resistance properties. However, mechanical, fire retardant, water resistance and acoustic properties may be further improved to obtain an optimal solid foam.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

The embodiments of the present disclosure provide a solid foam structure, a solid foam product, and a method for preparing a solid foam structure. Good mechanical properties in solid foams, such as high yield strength, may pertain to a closed cell structure where the cell walls enforce the material structure. On the other hand, good acoustic properties, such as high sound absorption coefficient in a wide frequency range, may be connected to high open porosity and low static airflow resistivity in the foam structure, necessitating an open cell structure. Therefore, having a foam material with a structure tunable between the closed and open cell ones may be beneficial for concomitantly optimized mechanical and acoustic properties.

Furthermore, good fire retardant properties may be related to non-combustible compounds present in the foam structure. Good water resistance properties may be connected to hydrophobic components.

According to a first aspect a solid foam structure is disclosed. The solid foam structure may comprise at least one foam sheet, wherein the solid foam structure may be configured to be prepared by making one or more perforations to the at least one foam sheet to tune mechanical and acoustic properties of the solid foam structure; or the solid foam structure may be configured to be prepared from a suspension comprising a binding agent, a foaming agent, fibers, and a solvent to tune mechanical, fire retardant, water resistance and acoustic properties of the solid foam structure. Optimizing amount of open and closed cells of the foam material may increase mechanical and acoustic properties. The solid foams may be made by foaming a material, creating a network of gas-filled pores, and then solidifying the structure to a solid material. Shifting the structure from a closed-cell one towards an open-cell one may be done either by breaking the cell walls after the solid foam is made, or by inducing imperfect cell wall formation already during the process of solidifying the structure. The first approach may entail, for example mechanically altering the structure by making perforations. The second approach may require chemical modifications in the composition of the initial suspension, or directly affecting the foaming or drying process. The optimal combination of binding and foaming agents may increase mechanical and acoustic properties. This may be achieved, for example by adding salt to the initial composition of a pectin cryogel, which may make holes to the cell walls. Currently, plastics may be the primary material in both achieving foams with high mechanical strength and good acoustic properties in practical applications. However, concerns about plastic pollution may lead to a search for more sustainable solutions.

According to an embodiment of the first aspect, the binding agent may comprise at least one of the following: methylcellulose, derivative of methylcellulose, carboxymethylcellulose, hydroxypropyl methylcellulose, ethyl cellulose, chitosan, magnesium sulfate, magnesium hydroxide, calcium carbonate, percipitated calcium carbonate, and/or citric acid. The binding agent may result a closed cell foam with good mechanical strength but poor acoustic properties. The binding agent is a chemical which may do at least one of the following: lower surface tension, increase viscosity, and/or facilitate solidification.

According to an embodiment of the first aspect, the foaming agent may comprise at least one of the following: sodium dodecyl sulfate, sodium lauryl sulfate, sodium lauryl glutamate, disodium cocoylglutamate, sodium coco sulfate, sodium tetradecyl sulfate, sodium cocoyl isethionate, cocamidopropyl betaine, and/or decyl glucoside. The foaming agent may form a structure, which may have a crosslinked fiber network with good acoustic properties but poor mechanical strength due to brittleness of the material.

According to an embodiment of the first aspect, the fibers may comprise at least one of the following: carbon fiber, carbon nanotube, graphene, carbon mesh, laponite, hemp, expanded polystyrene, polymer, polymer stick, yarn, cellulose, wood fiber, wood-based material, forest-based material, treated bio-based material, and/or untreated bio-based material. Different materials may be used as fibers.

According to an embodiment of the first aspect, the solvent may comprise at least one of the following: organic acid, acetone, alcohol, water, and/or dimethylsulfoxide.

According to an embodiment of the first aspect, the suspension comprises of the foaming agent 0.01 - 5.00 % by weight, the binding agent 0.01 - 5.00 % by weight, and the fibers 1 - 30 % by weight. With an optimal composition the mechanical strength, fire retardant, water resistance and the acoustic properties may be optimized.

According to an embodiment of the first aspect, the solid foam structure may comprise at least two foam sheets located on top of each other. Different amounts of the foam sheets may be located on top of each other to form solid foam structures having different thickness. The foam sheets may be attached to each other using an adhesive material. The adhesive material may be at least one of the following: water, suspension, and/or any adhesive.

According to an embodiment of the first aspect, the one or more perforations in the at least two solid foam sheets may not align. The perforations not aligning on different layers may enable increased air permeability while keeping the tortuous nature of the airflow paths. This may lead to increased acoustic absorbance inside the material, while keeping the general closed cell structure of the foam, which may provide mechanical strength.

According to an embodiment of the first aspect, the one or more perforations may be configured to be made by using at least one of the following: cutting, laser cutting, and/or waterjet cutting. Different tools and methods may be used when making perforations.

According to a second aspect, a solid foam product is disclosed. The solid foam product may comprise one or more solid foam structures according to any of first aspects above. It may be possible to make the foam product which may comprise one or more solid foam structures, wherein the solid foam structure may be configured to be prepared by making one or more perforations to the at least one foam sheet; and/or wherein the solid foam structure may be configured to be prepared from a suspension comprising a binding agent, a foaming agent, fibers, and a solvent. This may allow forming of different sandwich structures comprising different amounts of solid foam structures that may have been prepared with different methods. For example, the solid foam product may comprise one or more solid foam structures which may comprise one or more foam sheets and/or one or more solid foam structures made of suspension.

According to a third aspect, a method for preparing a solid foam structure is disclosed. The method may comprise preparing the solid foam structure comprising at least one foam sheet by making one or more perforations to the at least one foam sheet to tune mechanical and acoustic properties of the solid foam structure; or preparing the solid foam structure from a suspension comprising a binding agent, a foaming agent, fibers, and a solvent to tune mechanical, fire retardant, water resistance and acoustic properties of the solid foam structure. Optimizing amount of open and closed cells of the foam material may enchance mechanical and acoustic properties.

According to an embodiment of the third aspect, the method may further comprise mixing the foaming agent, the binding agent, and the fibers with the solvent to form the suspension; mixing air bubbles into the suspension to form a foam mixture; and solidifying the foam mixture to form the solid foam structure. Mixing air bubbles into the suspension may increase airflow permeability of the material.

According to an embodiment of the third aspect, temperature of the solvent is 1 - 90 °C, when the solvent is added. Heating the solvent may speed up the process.

According to an embodiment of the third aspect, stirring duration for the suspension, when the air bubbles are added into the suspension, is 1 second - 60 minutes. According to an example embodiment, stirring duration for the suspension, when the air bubbles are added into the suspension, is 1 minute - 60 minutes.

According to an embodiment of the third aspect, the foam mixture is allowed to solidify at an average temperature of -200 to 500 °C for a period of 10 seconds - 5000 hours. According to an example embodiment, the foam mixture is allowed to solidify at an average temperature of 1 - 200 °C for a period of 1 - 500 hours. The temperature may not need to be constant in the whole foam mixture.

According to an embodiment of the third aspect, the foam mixture is solidified by at least one of the following: heat, air flow, photocatalysts, crosslinking, and/or freezing. Solidification may use different methods to remove some of the water content.

According to an embodiment of the third aspect, the solid foam structure may be made by making the one or more perforations to at least two foam sheets; and layering the at least two perforated foam sheets on top of each other. Different amounts of the foam sheets may be located on top of each other to form solid foam structures having different thickness. The foam sheets may be attached to each other using an adhesive material. The adhesive material may be at least one of the following: water, suspension, and/or any adhesive.

According to an embodiment of the third aspect, layering the at least two perforated foam sheets on top of each other may be done so that the one or more perforations of the at least two solid foam sheets may not align. The perforations not aligning on different layers may enable increased air permeability while keeping the tortuous nature of the airflow paths. This may lead to increased acoustic absorbance inside the material, while keeping the general closed cell structure of the foam, which may provide mechanical strength.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 schematically shows an example of a solid foam structure seen from above according to an embodiment;
Figure 2 schematically shows a side view of another example of a solid foam structure according to an embodiment;
Figure 3 schematically shows example effect of perforation density on sound absorption spectrum according to an embodiment;
Figure 4a schematically shows an example representation of a combination of fibers and binding agents according to an embodiment;
Figure 4b schematically shows an example representation of a combination of fibers and foaming agents according to an embodiment;
Figure 4c schematically shows an example representation of an optimal combination of binding and foaming agents according to an embodiment;
Figure 5 shows example measurements of an absorption coefficient as a function of frequency for different material compositions according to an embodiment;
Figure 6 shows example stress-strain curves obtained from compression tests for different material compositions according to an embodiment;
Figure 7 shows comparison of an absorption coefficient and mechanical strength according to an embodiment; and
Figure 8 shows an example method for preparing a solid foam structure according to an embodiment.

Like references are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

According to an example embodiment, a method for producing a solid foam with tunable mechanical and acoustic properties comprises taking an existing solid foam and increasing the open porosity of the structure by making perforations to the material. Alternatively, the method for producing a solid foam with tunable mechanical, fire retardant, water resistance and acoustic properties may comprise producing solid foam from a suspension comprising fibers, foaming agent, binding agent, and solvent.

According to an example embodiment, a solid foam structure comprises at least one foam sheet. The solid foam structure may be prepared by making one or more perforations to the at least one foam sheet to tune mechanical and acoustic properties of the solid foam structure. Alternatively, a solid foam structure may be prepared from a suspension comprising a binding agent, a foaming agent, fibers, and a solvent to tune mechanical, fire retardant, water resistance and acoustic properties of the solid foam structure.

According to an example embodiment, to obtain optimal mechanical and acoustic properties, properties given by closed cell and open cell foams are combined. This may be done by taking a mechanically strong foam and making perforations into it, thus increasing the airflow permeability of the material. Alternatively, the chemical composition of the foam may be changed at the manufacture stage and combine a binding agent, which may produce a closed cell structure, with a foaming agent, which may produce an open cell structure.

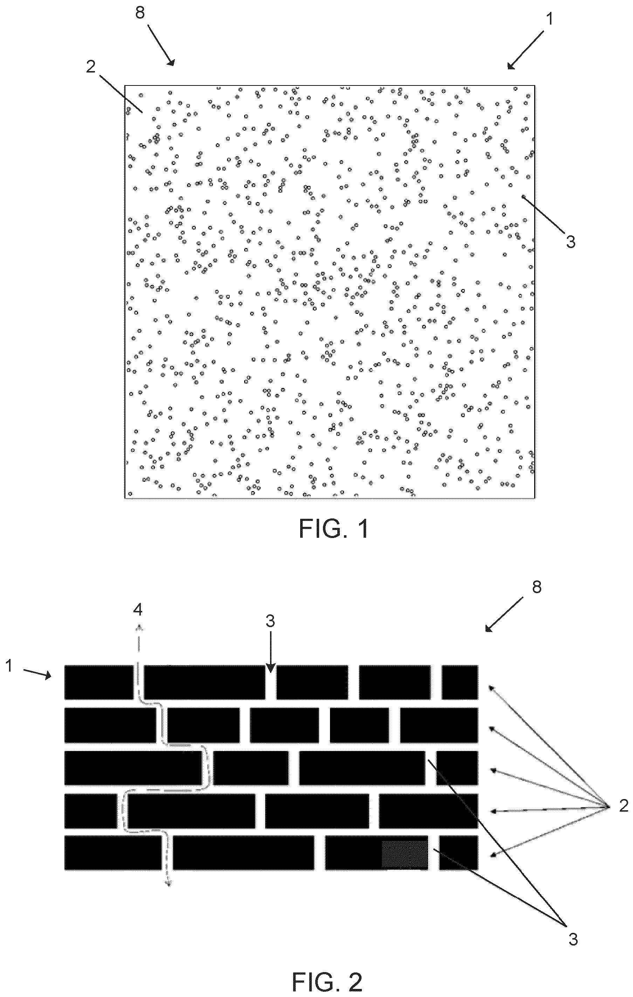

An example of figure 1 shows an example of a solid foam structure 1 or a solid foam product 8 seen from above. The solid foam structure 1 may comprise one or more foam sheets 2. The solid foam structure 1 may be prepared by making one or more perforations 3 to the at least one foam sheet 2 to tune mechanical and acoustic properties of the solid foam structure 1. Alternatively, the solid foam structure 1 may be prepared from a suspension comprising a binding agent, a foaming agent, fibers, and a solvent to tune mechanical, fire retardant, water resistance and acoustic properties of the solid foam structure.

In figure 1 example a random pattern of circular perforations 3 is shown. The holes such as perforations 3 may have a diameter of 0.28 mm, for example. There may be 1000 of perforations 3 in a square area, for example. A side length of the square area is, for example 40 mm, which may give a perforation area fraction of 3.85 %.

An example of figure 2 shows side view of a solid foam product 8 comprising solid foam structures 1. The figure 2 example shows a cross-section of five foam sheets 2. The foam sheets 2 comprise perforations 3, which may be placed on each sheet. The perforations 3 may be placed randomly on each sheet 2. This may enable increased air permeability while keeping the tortuous nature of the airflow paths 4. This may lead to increased acoustic absorbance inside the material, while keeping the general closed cell structure of the foam. This may provide mechanical strength.

According to an example embodiment, the foaming agent 7 comprises at least one of the following: sodium dodecyl sulfate, sodium lauryl sulfate, sodium lauryl glutamate, disodium cocoylglutamate, sodium coco sulfate, sodium tetradecyl sulfate, sodium cocoyl isethionate, cocamidopropyl betaine, and/or decyl glucoside.

According to an example embodiment, the fibers 5 comprise at least one of the following: carbon fiber, carbon nanotube, graphene, carbon mesh, laponite, hemp, expanded polystyrene, polymer, polymer stick, yarn, cellulose, wood fiber, wood-based material, forest-based material, treated bio-based material, and/or untreated bio-based material.

According to an example embodiment, the solvent comprises at least one of the following: organic acid, acetone, alcohol, water, and/or dimethylsulfoxide.

According to an example embodiment, the suspension comprises of the foaming agent 0.01 - 5.00 % by weight, the binding agent 0.01 - 5.00 % by weight, and the fibers 1 - 30 % by weight.

According to an example embodiment, to form the suspension the foaming agent 7, the binding agent 6, and the fibers 5 with the solvent are mixed. After that air bubbles may be mixed into the suspension to form a foam mixture and the foam mixture may be solidified to form the solid foam structure.

According to an example embodiment, temperature of the solvent is 1 - 90 °C, when the solvent is added.

According to an example embodiment, stirring duration for the suspension, when the air bubbles are added into the suspension, is 1 second - 60 minutes.

According to an example embodiment, the foam mixture is allowed to solidify at an average temperature of -200 - 500 °C for a period of 10 seconds - 5000 hours. The temperature may not need to be constant in the whole foam mixture.

According to an example embodiment, the foam mixture is solidified by at least one of the following: heat, air flow, photocatalysts, crosslinking, and/or freezing.

According to an example embodiment, the wet suspension is made by combining a binding agent 6, a foaming agent 7, and fibers 5 with a solvent. After that the suspension may be solidified by removing some of the water content by heat, air flow, freezing or solidification via photocatalysis or crosslinking. When photocatalysis is used, a photocatalyst may decompose in the presence of light into products that may enhance the solidification. Crosslinking may involve forming permanent chemical bonds between the foam constituents and increasing the viscosity of the liquid medium to reach a solid configuration.

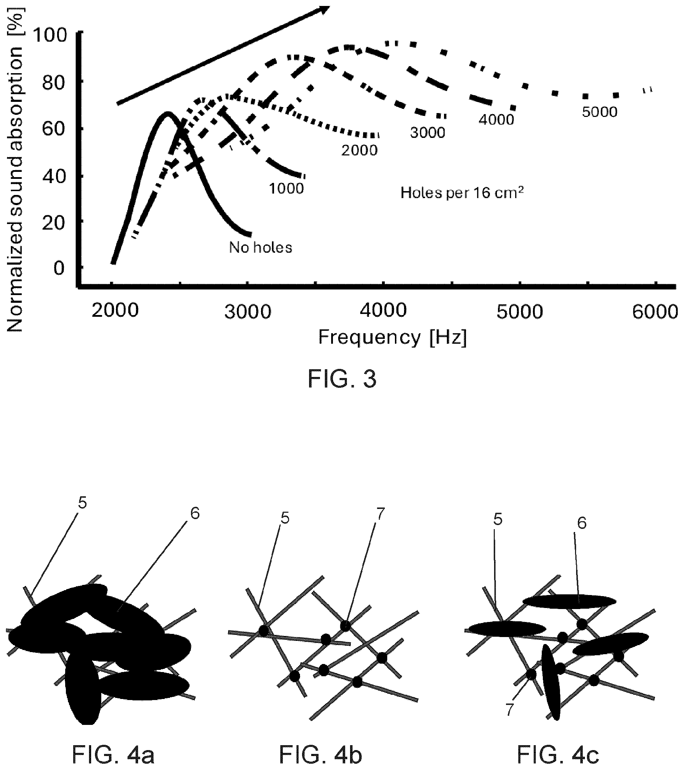

An example of figure 4a shows a schematic representation of a combination of fibers 5 and binding agents 6. With only the binding agent 6 the result may be a closed cell foam structure 1 with good mechanical strength but poor acoustic properties.

In figure 3 example of absorption coefficient of example structures with different perforation patterns is shown. The perforation pattern may cause absorption pike to change position depending on the pattern. The absorption pike may also be changing position according to different network structures when the solid foam structure 1 may be prepared from a suspension comprising a binding agent, a foaming agent, fibers, and a solvent to tune mechanical, fire retardant, water resistance and acoustic properties of the solid foam structure.

In example of figure 4a the binding agent may comprise at least one of the following: methylcellulose, derivative of methylcellulose, carboxymethylcellulose, hydroxypropyl methylcellulose, ethyl cellulose, chitosan, magnesium sulfate, magnesium hydroxide, calcium carbonate, percipitated calcium carbonate, and/or citric acid. Different binding agents may have different advantages. Methylcellulose may have advantage of being bio-based compound which may strengthen the mechanical structure of the example material and it may change the acoustic properties.

In example of figure 4a citric acid may have advantage of being bio-based, it crosslink the fiber network and it may strengthen mechanical properties. Citric acid may not affect the acoustic properties of the structure. Magnesium sulfate may strengthen fire retardant properties of the example structure and it may not be harmful compound. Perticipated calcium carbonate may strengthen the fire retardant and water resistance properties of the structure and it may not be harmful compound.An example of figure 4b shows a schematic representation of a combination of fibers 5 and foaming agent 7. With only foaming agent 7 the structure 1 may be a crosslinked fiber network with good acoustic properties but poor mechanical strength due to brittleness of the material.

In example of figure 4b the foaming agent comprises atleast one of the following: sodium dodecyl sulfate, sodium lauryl sulfate, sodium lauryl glutamate, disodium cocoylglutamate, sodium coco sulfate, sodium tetradecyl sulfate, sodium cocoyl isethionate, cocamidopropyl betaine, and/or decyl glucoside. Different foaming agents may have different advantages. Sodium cocoyl isethionata may have advantage of being bio-based compound which may not cause skin irritation of release microplastic.

An example of figure 4c shows a schematic representation of an optimal combination of fibers 5, binding agent 6, and foaming agent 7. With an optimal composition the mechanical strength, fire retardant, water resistance and the acoustic properties may be optimized.

The optimal composition of the example may be any combination containing of binding agent 6, foaming agent 7 and fibers 5 such that the structure is solidified by removing any solvent comprising at least one of the following: organic acid, acetone, alcohol, water, and/or dimethylsulfoxide. Different compositions may have different properties. Composition comprising methylcellulose, sodium cocoyl isethionate and wood fiber with water as removed solvent may have the property of being bio-based. By different compositions it may be possible to separately tune mechanical, fire retardant, water resistance and acoustic properties of the example structure.

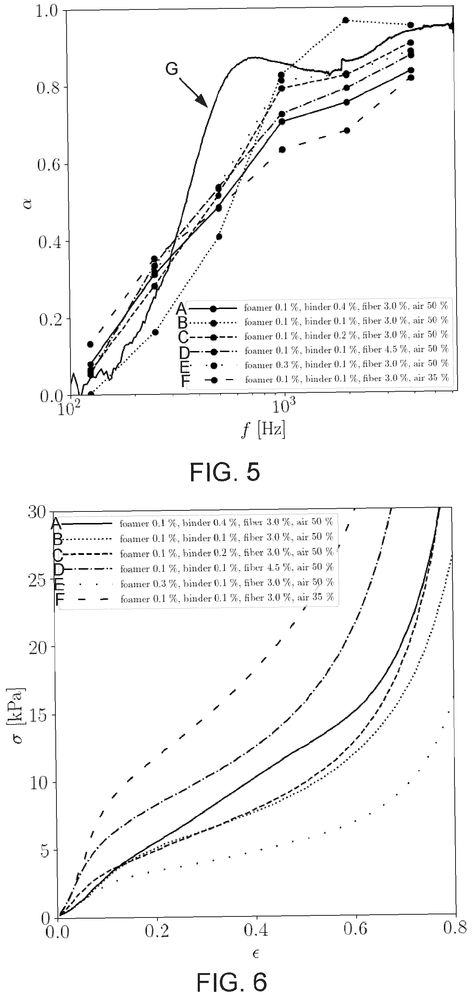

An example of figure 5 shows measurements of an absorption coefficient as a function of frequency for different material compositions. This may be performed using an impedance tube. In the example, a solid black line G represents a reference material (glass wool). The example of figure 5 shows that at higher frequencies the foam structures 1 with high foaming agent concentrations compared to binding agent concentrations and high air content may produce the highest sound absorption coefficients. This may be seen, for example from line B or line C. However, at lower frequencies the foam structures 1 with higher binding agent concentrations and low air content may produce higher sound absorption coefficients. This may be seen, for example from line A or line F.

An example of figure 6 shows engineering stress imposed on a sample as a function of an engineering strain in a compression experiment for different material compositions. Curves may show general behavior seen for cellular foam materials: an initial linear part, a plateau, and final compactification. The compositions that may perform best in the acoustic absorption tests, may perform the worst in the mechanical tests.

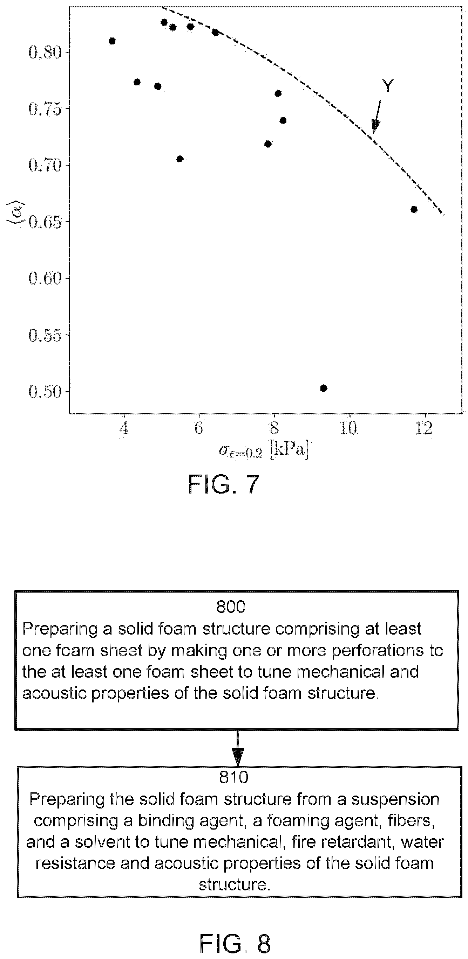

An example of figure 7 shows comparison of an absorption coefficient (averaged over the frequency range) and mechanical strength (stress at 20% strain). Given a desired strength level it may be possible, from this example figure 7, to see the best absorbance achievable. In the example of figure 7, it has been indicated by a guide for the eye dashed line Y.

According to an example embodiment, a solid foam product 8 comprises one or more solid foam structures 1 according to any of embodiments above. The foam product 8 may comprise one or more solid foam structures 1, wherein the solid foam structure 1 may be configured to be prepared by making one or more perforations 3 to the at least one foam sheet 2. Alternatively, the solid foam structure 1 may be configured to be prepared from a suspension comprising a binding agent 6, a foaming agent 7, fibers 5, and a solvent. This may allow forming of different sandwich structures comprising different amounts of the solid foam structures 1 that may have been prepared with different methods.
Figure 8 illustrates an example of a method for preparing a solid foam structure 1.

At operation 800, the method may comprise preparing the solid foam structure 1 comprising at least one foam sheet 2 by making one or more perforations 3 to the at least one foam sheet 2 to tune mechanical and acoustic properties of the solid foam structure 1.

At operation 810, the method may comprise preparing the solid foam structure 1 from a suspension comprising a binding agent 6, a foaming agent 7, fibers 5, and a solvent to tune mechanical, fire retardant, water resistance and acoustic properties of the solid foam structure 1.

Further features of the method directly result from functionalities of, for example, the solid foam structure 1. Different variations of the method may be also applied, as described in connection with the various embodiments.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first', 'second', or 'third' subjects, this does not necessarily indicate any order or importance of the subjects. Instead, such attributes may be used solely for the purpose of making a difference between subjects. It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A solid foam structure (1)
comprising at least one foam sheet (2), wherein the solid foam structure (1) is configured to be prepared from a suspension comprising a binding agent (6), a foaming agent (7), fibers (5), and a solvent to separately tune mechanical, fire retardant, water resistance, and acoustic properties of the solid foam structure (1), wherein
the binding agent (6) comprises at least one of the following: methylcellulose, hydroxypropyl methylcellulose, ethyl cellulose, magnesium sulfate, magnesium hydroxide, calsium carbonate, percipitated calsium carbonate and/or citric acid; and
the foaming agent (7) comprises at least one of the following: sodium dodecyl sulfate, sodium lauryl glutamate, disodium cocoylglutamate, sodium coco sulfate, sodium tetradecyl sulfate, sodium cocoyl isethionate, cocamidopropyl betaine, and/or decyl glucoside.

2. The solid foam structure (1) according to claim 1, wherein the fibers (5) comprise at least one of the following: carbon fiber, carbon nanotube, graphene, carbon mesh, laponite, hemp, expanded polystyrene, polymer, polymer stick, yarn, cellulose, wood fiber, wood-based material, forest-based material, treated bio-based material, and/or untreated bio-based material.

3. The solid foam structure (1) according to claim 1 or claim 2, wherein the solvent comprises at least one of the following: organic acid, acetone, alcohol, water, and/or dimethylsulfoxide.

4. The solid foam structure (1) according to any preceding claim, wherein the suspension comprises of the foaming agent 0.01 - 5.00 % by weight, the binding agent 0.01 - 5.00 % by weight, and the fibers 1 - 30 % by weight.

5. A method for preparing a solid foam structure (1), wherein the method comprises
preparing the solid foam structure (1) from a suspension comprising a binding agent (6), a foaming agent (7), fibers (5), and a solvent to separately tune mechanical, fire retardant, water resistance, and acoustic properties of the solid foam structure (1), wherein
the binding agent (6) comprises at least one of the following: methylcellulose, hydroxypropyl methylcellulose, ethyl cellulose, magnesium sulfate, magnesium hydroxide, calsium carbonate, percipitated calsium carbonate and/or citric acid; and
the foaming agent (7) comprises at least one of the following: sodium dodecyl sulfate, sodium lauryl glutamate, disodium cocoylglutamate, sodium coco sulfate, sodium tetradecyl sulfate, sodium cocoyl isethionate, cocamidopropyl betaine, and/or decyl glucoside.

6. The method according to claim 5, wherein the method further comprises
mixing the binding agent (6), the foaming agent (7), and the fibers (5) with the solvent to form the suspension;
mixing air bubbles into the suspension to form a foam mixture; and
solidifying the foam mixture to form the solid foam structure.

7. The method according to claim 5 or claim 6 wherein temperature of the solvent is 1 - 90 °C, when the solvent is added.

8. The method according to claim 6 or claim 7, wherein stirring duration for the suspension, when the air bubbles are added into the suspension, is 1 second - 60 minutes.

9. The method according to any of claim 6 to 8, wherein the foam mixture is allowed to solidify at an average temperature of -200 to 500 °C for a period of 10 seconds - 5000 hours.

10. The method according to claim 6 to 9, wherein the foam mixture is solidified by at least one of the following: heat, air flow, photocatalysts, crosslinking, and/or freezing.
